# EUROPÄISCHE PATENTANMELDUNG

(11) **EP 2 098 398 A2**
(43) Veröffentlichungstag der Anmeldung: **09.09.2009**
(21) Anmeldenummer: 09003066.9
(22) Anmeldetag: 04.03.2009
(51) Int. Cl.: B60J 7/12

(54) **Verdeck eines Cabriolet-Fahrzeugs**

(30) Priorität: 06.03.2008 DE 102008012887
(71) Anmelder: Wilhelm Karmann GmbH, 49084 Osnabrück (DE)
(72) Erfinder: Hilbk, Holger, 49201 Dissen a. T.W. (DE)

(57) **Zusammenfassung**

Ein Verdeck (3) eines Cabriolet-Fahrzeugs (1) umfassend:
- einen an einem Hauptlager (13) angelenkten Hauptlenker (23) eines Verdeckgestänges (15);
- einen Spannbügel (37), welcher in geschlossener Position des Verdecks einen verdeckbezug (7) in einer Spannstellung hält, wobei der Spannbügel mittels eines mit einem Sturmgestänge (41) zusammenwirkenden Hilfsantrieb (57) zwischen der Spannstellung und einer Lösestellung bewegbar ist;
- das mit zwei gelenkig gekoppelten Sturmhebeln (45, 47) ausgebildete Sturmgestänge (41), welche sich bei sich in seiner Spannstellung befindlichem Spannbügel in einer totpunktnahen Stellung befinden, wobei ein erster Sturmhebel (45) einerseits mit dem Spannbügel und andererseits gelenkig mit dem zweiten Sturmhebel (47) verbunden ist; und
- ein mit zwei gelenkig gekoppelten Spannhebeln (51, 53) ausgebildetes Spanngestänge (43), wobei ein erster Spannhebel (51) einerseits mit dem Sturmgestänge (41) und andererseits gelenkig mit einem zweiten Spannhebel (53) verbunden ist, und wobei die beiden Spannhebel bei sich in Spannstellung befindlichem Spannbügel eine Übertotpunktstellung einnehmen.

Der Spannbügel ist dabei über einen Mehrgelenkmechanismus (39) derart an dem Hauptlager (13) oder einer Fahrzeugkarosserie angelenkt, dass der Spannbügel durch den Hilfsantrieb (57) unabhängig von einer Bewegung einer Dachspitze (25) bewegbar ist.

## Beschreibung

Die Erfindung betrifft ein Verdeck eines Cabriolet-Fahrzeugs, welches von einem Hauptantrieb zwischen einer einen Fahrgastraum überspannenden geschlossenen Position und einer den Fahrgastraum freigebenden offenen Position verfahrbar ist, nach der im Oberbegriff des Patentanspruches 1 näher definierten Art.

Aus der DE 101 57 819 B4 ist ein verstellbares Fahrzeugdach bekannt, das ein zwischen einer Schließstellung und einer Ablagestellung verstellbares Faltverdeck mit einem Verdeckgestänge und einem verdeck-Bezugstoff aufweist.

Das verstellbare Fahrzeugdach weist dabei einen dem Verdeckgestänge zugeordneten Stoffspannbügel, der in Schließstellung des Faltverdecks in einer den Verdeck-Bezugstoff mit Spannung beaufschlagenden Spannstellung gehalten und von einem Hillsaktuator zwischen der Spannstellung und einer Lösestellung zu verstellen ist, weiterhin einen an der Fahrzeugkarosserie schwenkbar gelagerten und über einen Hauptaktuator verstellbaren Hauptlenker des Verdeckgestänges, an dem der Stoffspannbügel schwenkbar gelagert ist, und ein zweiteiliges so genanntes Sturmgestänge auf. Über das Sturmgestänge wird der Stoffspannbügel in Schließstellung des Faltverdecks in der Spannstellung gehalten , wobei das Sturmgestänge zwei über ein Gelenk gekoppelte Sturmhebel umfasst, die in Spannstellung in einer totpunktnahen Lage stehen. Das Sturmgestänge ist mit einem Spanngestänge gekoppelt, wobei das Spanngestänge zwei gelenkig gekoppelte Spannlenker umfasst, von denen ein erster Spannlenker gelenkig mit dem Sturmgestänge verbunden ist. Hierbei ist es vorgesehen, dass der zweite Spannlenker des Spanngestänges gelenkig mit dem Hauptlenker verbunden ist und die beiden Spannlenker in Spannstellung in Übertotpunktlage stehen.

Nachteilhaft ist bei einer derartigen Lösung, bei welcher der Stoffspannbügel an dem Hauptlenker schwenkbar gelagert ist, dass die Gestaltung der Bewegungsbahn des Stoffspannbügels deutlich eingeschränkt ist, da z. B. eine Kopplung mit der Bewegung der Dachspitze zu berücksichtigen ist und eine schnelle Abkippbewegung des Stoffspannbügels in Richtung eines Fahrzeugbodens durch die einfache gelenkige Anbindung an das Hauptlager nicht möglich ist.

Weiterhin ist der Stoffspannbügel bei einer derartigen Anbindung an dem Hauptlager nachteilhafterweise weit heckwärts im Cabriolet-Fahrzeug angeordnet.

Es ist Aufgabe der vorliegenden Erfindung, ein Verdeck eines Cabriolet-Fahrzeugs der eingangs genannten Art zu schaffen, bei welchem ein Spannbügel mit einer großen Freiheit hinsichtlich der Bewegungsbahn zwischen seiner Spannstellung und seiner Lösestellung flexibel bewegbar ist, wobei der Spannbügel in Platz sparender Weise mit einem Hauptlager zusammenwirkt.

Diese Aufgabe wird bei einem Verdeck der eingangs genannten Art gemäß den Merkmalen des kennzeichnenden Teils des Patentanspruches 1 gelöst.

Es wird ein Verdeck eines Cabriolet-Fahrzeugs vorgeschlagen, welches von einem Hauptantrieb zwischen einer einen Fahrgastraum überspannenden geschlossenen Position und einer den Fahrgastraum freigebenden offenen Position verfahrbar ist, umfassend:
- einen an einem Hauptlager angelenkten Hauptlenker eines Verdeckgestänges;
- einen Spannbügel, welcher in geschlossener Position des Verdecks einen Verdeckbezug in einer Spannstellung hält, wobei der Spannbügel mittels eines mit einem Sturmgestänge zusammenwirkenden Hilfsantriebs zwischen der Spannstellung und einer Lösestellung bewegbar ist, und wobei das Sturmgestänge mit zwei gelenkig gekoppelten Sturmhebeln ausgebildet ist, welche sich bei sich in seiner Spannstellung befindlichem Spannbügel in einer totpunktnahen Stellung befinden, und wobei ein erster Sturmhebel einerseits mit dem Spannbügel und andererseits gelenkig mit dem zweiten Sturmhebel verbunden ist;
- ein mit zwei gelenkig gekoppelten Spannhebeln ausgebildetes Spanngestänge, wobei ein erster Spannhebel einerseits mit dem Sturmgestänge und andererseits gelenkig mit einem zweiten Spannhebel verbunden ist, und wobei die beiden Spannhebel bei sich in Spannstellung befindlichem Spannbügel eine Übertotpunktstellung einnehmen. Dabei ist erfindungsgemäß vorgesehen, dass der Spannbügel über einen Mehrgelenkmechanismus derart an dem Hauptlager oder einer Fahrzeugkarosserie angelenkt ist, dass der Spannbügel durch den Hilfsantrieb unabhängig von einer Bewegung einer Dachspitze bewegbar ist.

Ein erfindungsgemäßes Verdeck hat den Vorteil, dass der Spannbügel durch seine über einen Mehrgelenkmechanismus realisierte Anbindung an das Hauptlager entkoppelt von der Dachspitze bewegbar ist und in einer schnellen Abkippbewegung bzw. Absinkbewegung in seine Position bei offenem Verdeck - insbesondere in eine verdeckablagewanne - überführbar ist.

Der Mehrgelenkmechanismus kann dabei derart ausgebildet werden, dass eine Bewegungsbahn des Spannbügels zwischen seiner Spannposition bei geschlossenem Verdeck, seiner Löseposition und seiner Position bei offenem Verdeck flexibel gestaltbar ist und der Spannbügel somit gesteuert bewegbar ist. Hierdurch ist der gesamte Bewegungsablauf des Verdecks harmonisch gestaltbar.

Durch die erfindungsgemäße Anbindung des Spannbügels mittels des Mehrgelenkmechanismus an das Hauptlager kann der Spannbügel zudem gegenüber einem direkt an dem Hauptlager angeordneten Spannbügel vorteilhafterweise in Fahrzeugfrontrichtung verschoben angeordnet werden, so dass das Verdeck in offener Position des Verdecks hinsichtlich seiner Erstreckung in Fahrzeugheckrichtung verkürzt ausgebildet ist.

Weiterhin vorteilhaft ist bei einem erfindungsgemäß ausgebildeten verdeck, dass negative Strakeinflüsse durch das Spanngestänge auf die Hauptkinematik vermieden werden können.

Als sehr vorteilhaft zum Erreichen der erfindungsgemäßen Ziele hat sich erwiesen, wenn der der Mehrgelenkmechanismus als ein Viergelenkmechanismus ausgebildet ist.

Bei einer vorteilhaften Ausbildung kann der Viergelenkmechanismus zwei Hebel aufweisen, von denen ein erster Hebel über einen ersten Gelenkpunkt mit dem Spannbügel und einen zweiten Gelenkpunkt mit dem Hauptlager und ein zweiter Hebel über einen dritten Gelenkpunkt mit dem Spannbügel und über einen vierten Gelenkpunkt mit dem Hauptlager verbunden ist.

Durch das Vorsehen eines Langloches an einem der Gelenkpunkte, vorzugsweise am zweiten Hebel in einem Bereich des dritten Gelenkpunkts, ist es möglich, dass der Spannbügel unabhängig von einer Verdeckbewegung von dem Hilfsaktuator, welcher insbesondere als hydraulische Antriebseinrichtung ausgebildet sein kann, von seiner Spannstellung in die Lösestellung und umgekehrt bewegt werden kann ohne dass der Viergelenkmechanismus aktiv wird.

Insbesondere vorteilhaft ist es dabei, wenn der zweite Hebel mit dem Langloch derart angeordnet ist, dass der Spannbügel bei inaktive Hilfsaktuator durch die Schwerkraft in seine Spannstellung bewegt wird.

Um ein Zusammenwirken des Viergelenkmechanismus mit dem Hauptaktuator des Verdecks zu realisieren, kann der erste Hebel des Viergelenkmechanismus über einen Verbindungshebel auf einfache weise mit dem Hauptlenker verbunden werden, auf welchen der Hauptantrieb entweder direkt oder indirekt, beispielsweise über eine Hauptsäule des Verdecks, einwirkt.

In einer einfachen Ausbildung eines erfindungsgemäßen Verdecks kann der zweite Spannhebel an seinem der gelenkigen Verbindung mit dem ersten Spannhebel abweisenden Ende mit dem Hauptlenker oder einer Hauptsäule oder einem Element des Verdeckgestänges verbunden sein, und/oder der zweite Sturmhebel ist an seinem der gelenkigen Verbindung mit dem ersten Sturmhebel abweisenden Ende mit dem Verdeckgestänge verbunden.

In einer vorteilhaften Anordnung des Hilfsaktuators an dem verdeck kann dieser einerseits mit dem Spanngestänge, insbesondere mit dem zweiten Spannhebel, und andererseits mit dem Hauptlenker oder der Hauptsäule verbunden sein.

Um den Spannbügel bei sich in geschlossener Position befindlichem Verdeck in seiner Spannstellung zu halten, kann gemäß einer vorteilhaften Weiterbildung der Erfindung ein Anschlagelement vorgesehen sein, mit welchem der zweite Spannhebel bei sich in geschlossener Position des Verdecks zur Lagesicherung des Spannbügels zusammenwirkt.

Eine zusätzliche Absicherung des Spannbügels in seiner Spannstellung kann dadurch realisiert werden, dass eine Schließeinrichtung vorgesehen ist, mittels welcher der Spannbügel in seiner Position bei geschlossenem Verdeck entgegen einer Bewegung in Fahrzeughochrichtung sicherbar ist. Hierdurch kann ein Eingriff in das Cabriolet-Fahrzeug von außen stark erschwert werden.

Weitere Vorteile und vorteilhafte Ausführungen eines Verdecks eines Cabriolet-Fahrzeugs nach der Erfindung ergeben sich aus den Patentansprüchen, der zeichnung und der Beschreibung.

Nachfolgend ist ein vorteilhaftes Ausführungsbeispiel eines Verdecks eines Cabriolet-Fahrzeugs anhand der Zeichnung prinzipmäßig beschrieben.

Es zeigt:
- Fig. 1: eine stark vereinfachte dreidimensionale Darstellung eines Cabriolet-Fahrzeugs mit einem als Soft-Top-verdeck ausgebildeten Verdeck in einer geschlossenen Position;
- Fig. 2: eine vereinfachte Seitenansicht des Verdecks der Fig. 1 ohne einen Verdeckbezug, wobei das Verdeck in einer geschossenen Position mit einem Spannbügel in einer Spannstellung dargestellt ist;
- Fig. 3: eine vereinfachte Seitenansicht des Verdecks der Fig. 2, wobei der Spannbügel des Verdecks in einer gegenüber der in der Fig. 2 dargestellten Spannstellung in Fahrzeughochrichtung verschwenkten Position gezeigt ist;
- Fig. 4: eine vereinfachte Seitenansicht des Verdecks der Figuren 2 und 3, wobei der Spannbügel in einer weiter gegenüber der Spannstellung in Fahrzeughochrichtung verschwenkten Lösestellung gezeigt ist;
- Fig. 5: eine vereinfachte Seitenansicht des Verdecks der Figuren 2 bis 4, wobei das Verdeck in einer gegenüber der geschlossenen Position verschwenkten Zwischenposition dargestellt ist;
- Fig. 6: eine vereinfachte Seitenansicht des Verdecks der Figuren 2 bis 5, wobei das Verdeck in einer offenen Position dargestellt ist; und
- Fig. 7: eine vereinfachte dreidimensionale Ansicht des Verdecks der Figuren 1 bis 6 in seiner geschlossenen Position aus einer anderen Perspektive.

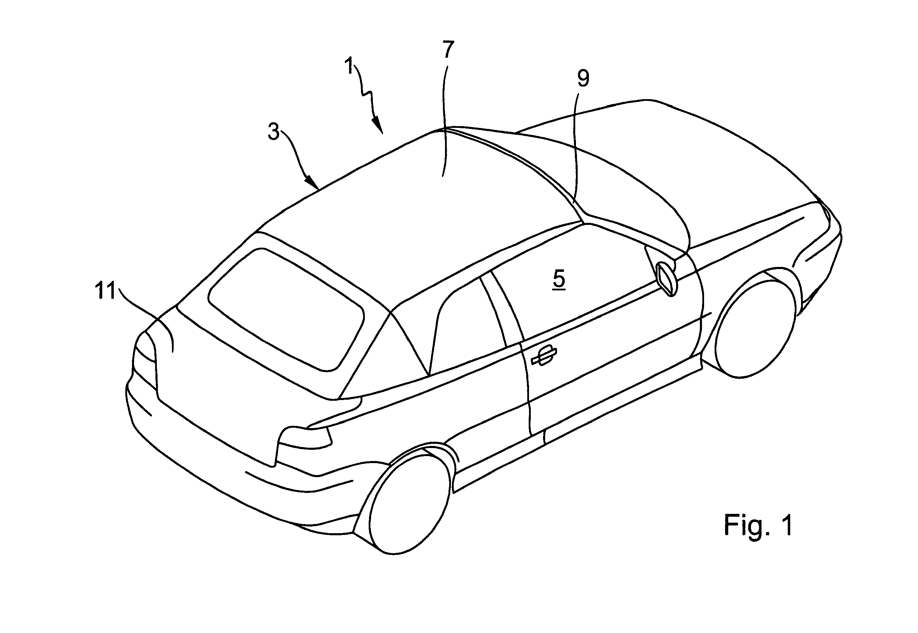

In Fig. 1 ist ein Cabriolet-Fahrzeug 1 mit einem in geschlossener Position dargestellten, als Soft-Top-Verdeck ausgebildeten Verdeck 3 gezeigt, wobei das Verdeck 3 zwischen der einen Fahrgastraum 5 überdeckenden geschlossenen Position und einer den Fahrgastraum 5 freigebenden offenen Position überführt werden kann.

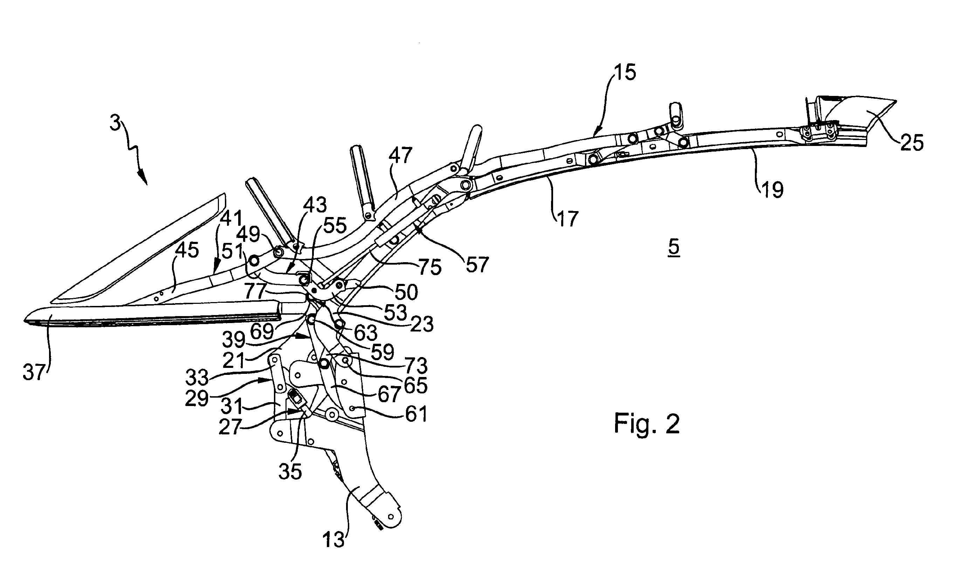

In der dargestellten geschlossenen Position erstreckt sich das Verdeck 3 von seiner fahrzeugfrontseitigen Anordnung an einem Windschutzscheibenrahmen 9 bis zu seiner fahrzeugheckseitigen Anordnung an einem Heckdeckel 11. Das Verdeck 3 weist einen flexiblen Verdeckbezug 7 auf, welcher in den Figuren 2 bis 7 der Übersichtlichkeit halber nicht dargestellt ist.

In Fig. 2 ist das Verdeck 3 in einer Seitenansicht dargestellt, wobei ein an einem Hauptlager 13 angeordnetes Verdeckgestänge 15 ersichtlich ist. Das Verdeckgestänge 15 ist mit symmetrisch zu einer Fahrzeuglängsachse angeordneten Seitenrahmenelementen 17, 19 des Verdeckgestänges 15 ausgebildet, wobei hintere Seitenrahmenelemente 17 einenends über eine Hauptsäule 21 und einen Hauptlenker 23 schwenkbeweglich an dem Hauptlager 13 abgestützt und anderenends gelenkig mit den vorderen Seitenrahmenelementen 19 verbunden sind.

Die vorderen Seitenrahmenelemente 19 sind in einem Fahrzeugfrontseitigen Bereich über eine in der dargestellten Schließstellung an dem Windschutzscheibenrahmen 9 festlegbare Dachspitze 25 verbunden.

Zur Verdeckbewegung ist ein Hauptaktuator vorgesehen, welcher vorliegend hydraulisch als ein Haupthydraulikantrieb 27 ausgebildet und im Bereich des Hauptlagers 13 angeordnet ist. Der Haupthydraulikantrieb 23 wirkt über einen Hebelmechanismus 29 vorliegend mit der Hauptsäule 21 zusammen.

Der Hebelmechanismus 29 ist dabei mit einem ersten Lenker 31 und einem zweiten Lenker 33 ausgebildet, wobei der erste Lenker 31 einenends an dem Hauptlager 13 angeordnet ist und anderenends mit dem zweiten Lenker 33 gelenkig verbunden ist. Der zweite Lenker 33 ist in seinem dem ersten Lenker 31 des Hebelmechanismus 29 abweisenden Bereich gelenkig mit der Hauptsäule 21 verbunden.

Der Haupthydraulikantrieb 23 wirkt im Bereich der gelenkigen Verbindung des ersten Lenkers 31 und des zweiten Lenkers 33 des Hebelmechanismus 29 mit dem Hebelmechanismus 29 zusammen, wobei eine Bewegung eines Kolbens 35 des Haupthydraulikzylinder 23 über eine Bewegung der Lenker 31 und 33 des Hebelmechanismus 29 zu einer Bewegung der Hauptsäule 21 und damit zu einer Verdeckbewegung führt.

In einem heckseitigen Bereich des Verdecks 3 ist ein Spannbügel 37 ausgebildet, welcher über einen als Viergelenkmechanismus 39 ausgebildeten Mehrgelenkmechanismus in Fahrzeugquerrichtung beidseitig an das Hauptlager 13 angebunden ist. Der Spannbügel 37 ist in Fig. 2 in einer Spannstellung gezeigt, welche der Spannbügel 37 bei geschlossenem Verdeck 3 einnimmt, und in welcher der an dem Spannbügel 37 angeordnete Verdeckbezug 7 durch den Spannbügel 37 gespannt wird.

Um den Spannbügel 37 in geschlossener Position des Verdecks 3 in seiner Spannstellung gegen eine Bewegung in Fahrzeughochrichtung zu sichern, ist ein im wesentlichen in Fahrzeugheckrichtung abfallend verlaufendes sogenanntes Sturmgestänge 41 und ein Spanngestänge 43 vorgesehen.

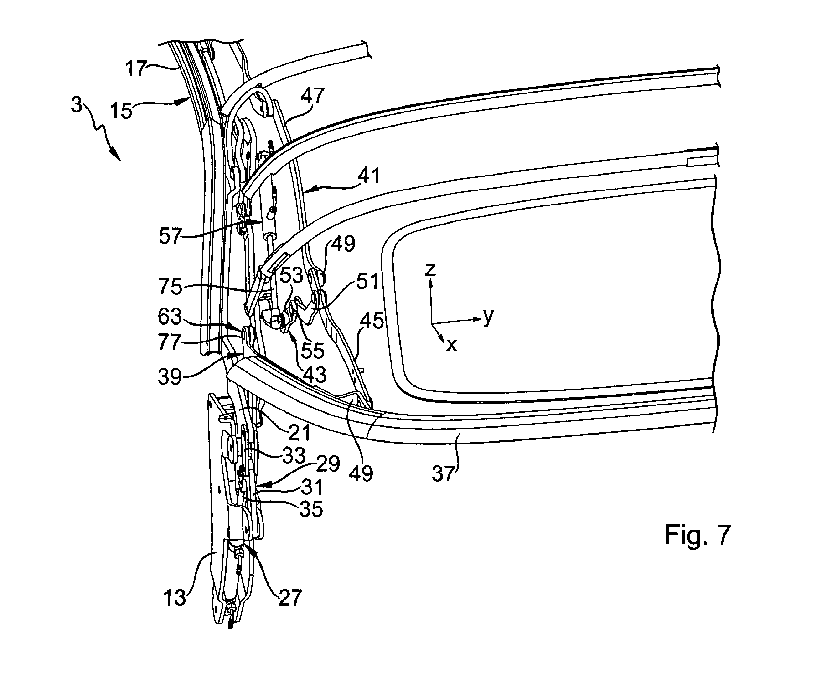

Das in der geschlossenen Position des Verdecks 3 eine totpunktnahe Position einnehmende Sturmgestänge 41 ist mit einem ersten Sturmhebel 45 und einem zweiten Sturmhebel 47 ausgebildet, wobei der erste Sturmhebel 45, wie in der Fig. 7 ersichtlich ist, in einem fahrzeugheckseitigen Bereich über einen Beschlag 49 an dem insbesondere als Stranggussteil ausgebildeten Spannbügel 37 angeordnet ist.

In einer alternativen Ausbildung hierzu kann es auch vorgesehen sein, dass der erste Spannbügel bei einem insbesondere als Gussteil ausgebildetem Spannbügel direkt an dem Spannbügel angeordnet ist.

An seinem in Fahrzeugfrontrichtung weisenden Ende ist der erste Sturmhebel 45 über einen ersten Drehpunkt 49 mit dem zweiten Sturmhebel 47 verbunden, welcher wiederum an seinem dem Drehpunkt 49 abweisenden fahrzeugfrontseitigen Ende mit der Hauptsäule 21 verbunden ist.

In einer hierzu alternativen Ausbildung kann ein dem ersten Drehpunkt abgewandtes Ende des zweiten Sturmhebels auch an dem Hauptlenker oder einem anderen Verdeckgestängeelement angeordnet sein.

Das Spanngestänge 43 weist einen ersten Spannhebel 51 und einen zweiten Spannhebel 53 auf, welche über einen zweiten Drehpunkt 55 gelenkig miteinander verbunden sind. Der erste Spannhebel 51 ist an einem dem zweiten Drehpunkt 55 abgewandten Ende im Bereich des ersten Drehpunkts 49 des Sturmgestänges 41 mit dem Sturmgestänge 41 verbunden, wohingegen der zweite Spannhebel 53 an seinem dem zweiten Drehpunkt 55 abgewandten Ende mit dem Hauptlenker 23 gelenkig verbunden ist.

In einer hierzu alternativen Ausbildung der Erfindung kann der zweite Spannhebel auch an seinem dem zweiten Drehpunkt abgewandten Ende mit der Hauptsäule gelenkig verbunden sein.

Im Bereich des zweiten Drehpunkts 55 des Spanngestänges 41 wirkt ein als Hydraulikantrieb 57 ausgebildeter Hilfsantrieb, welcher anderenends an dem Auptlenker 23 angeordnet ist, zur Bewegung des Spannbügels 37 mit dem Spanngestänge 41 zusammen, welches in geschlossener Position des Verdecks 3 ein Übertotpunktstellung einnimmt.

In einer hierzu alternativen Ausbildung der Erfindung kann es auch vorgesehen sein, dass der Hydraulikantrieb an seinem der Anordnung an dem Spanngestänge abgewandten Ende mit der Hauptsäule verbunden ist.

Bei der gezeigten Ausführung ist an dem Hauptlenker 23 im Bereich der Anbindung des zweiten Spannhebels 53 an den Hauptlenker 23 ein Anschlagelement 50 ausgebildet, an welchem der zweite Spannhebel 53 in geschlossener Position des Verdecks 3 anliegt. In drucklosem zustand des Hydraulikantriebs 57 ist durch das Anschlagelement 50 sichergestellt, dass der Spannbügel 37 nicht in Fahrzeughochrichtung verschwenkt werden kann.

Der Viergelenkmechanismus 39, über welchen der Spannbügel 37 mit dem Hauptlager 13 zusammenwirkt, weist vier über einen ersten Hebel 67 und eine zweiten Hebel 69 verbundene Gelenkpunkte auf, wovon ein erster Gelenkpunkt 59 und ein dritter Gelenkpunkt 63 in einem fahrzeugfrontseitigen Bereich des Spannbügels 37 und ein zweiter Gelenkpunkt 61 und ein vierter Gelenkpunkt 65 an dem Hauptlager 12 angeordnet sind.

Der erste Hebel 67 des Viergelenkmechanismus 39, welcher sich in geschlossener Position des Verdecks 3 annähernd in Fahrzeughochrichtung erstreckt, verbindet den ersten in Fahrzeughochrichtung unterhalb des dritten Gelenkpunkts 63 an dem Spannbügel 37 angeordneten Gelenkpunkt 59 mit dem zweiten in Fahrzeughochrichtung unterhalb des vierten Gelenkpunkts 65 an dem Hauptlager 13 angeordneten Gelenkpunkt 61.

Der zweite vorliegend geschwungen ausgebildete Hebel 69 des viergelenkmechanismus 39 verbindet dagegen den dritten Gelenkpunkt 63 mit dem vierten Gelenkpunkt 65.

Um den Spannbügel 37 an eine Verdeckbewegung durch den Haupthydraulikzylinder 27 zu koppeln, ist der Viergelenkmechanismus 39 - und dabei der erste Hebel 67 des viergelenkmechanismus 39 - über einen Verbindungshebel 73 gelenkig mit dem Haupthebel 23, welcher wiederum seinerseits mit der von dem Haupthydraulikzylinder 27 angetriebenen Hauptsäule 21 gelenkig zusammenwirkt, verbunden.

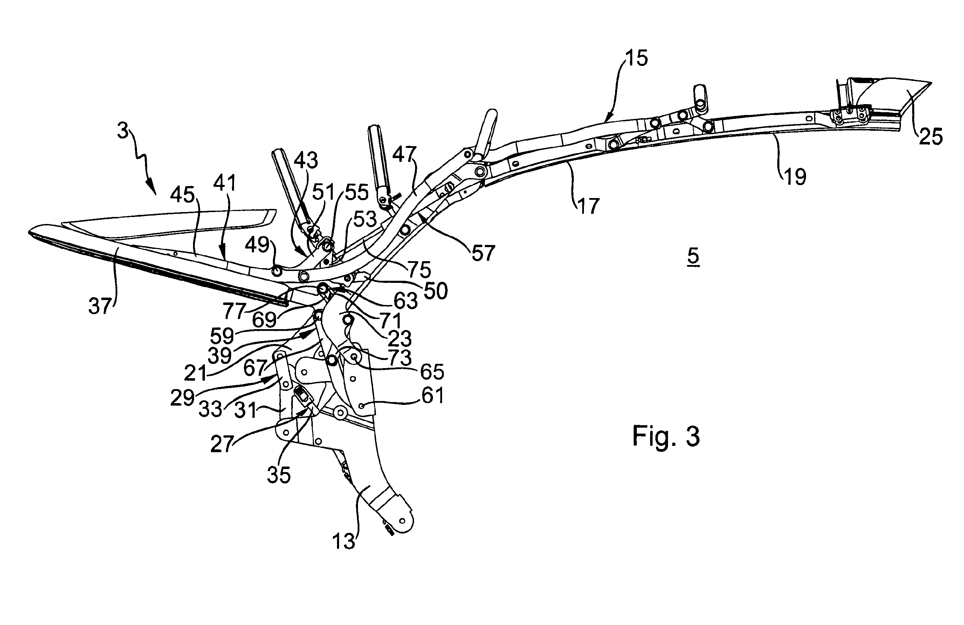

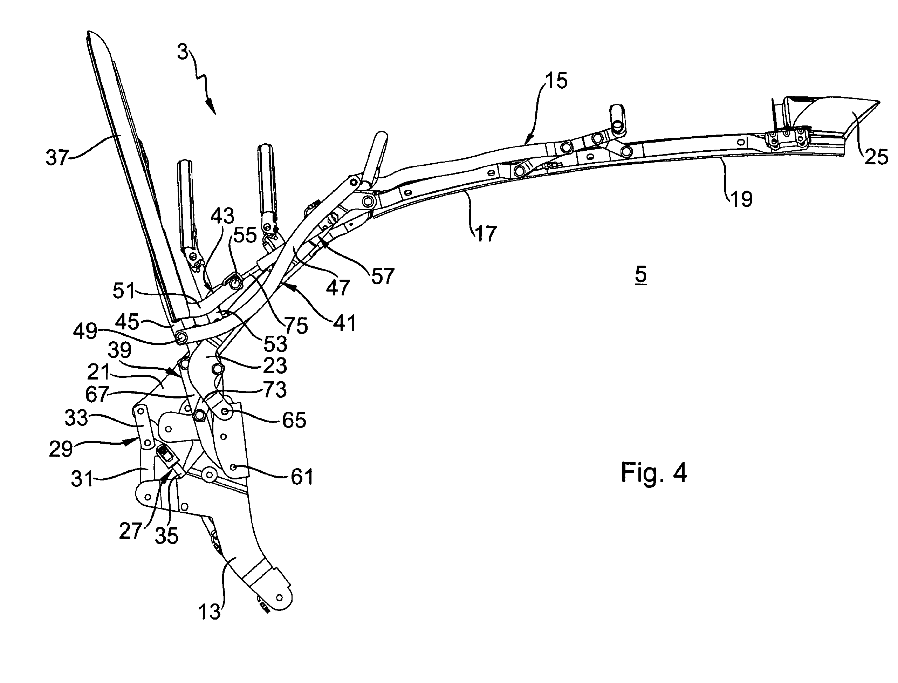

Mittels des Hydraulikantriebs 57 kann der Spannbügel 37 von seiner in der Fig. 2 dargestellten Spannstellung über eine in der Fig. 3 dargestellte Zwischenstellung in eine in der Fig. 4 dargestellte Lösestellung überführt werden. Hierzu wird ein Kolben 75 des Hydraulikzylinders 57 eingefahren, so dass der zweite Spannhebel 53 des Spanngestänge 43 hierdurch um seine Anlenkung an dem Hauptlenker 23 rotatorisch bewegt wird.

Über den zweiten Drehpunkt 55 wird der erste Spannhebel 51 des Spanngestänges 43 hierbei mitbewegt, wobei der erste Spannhebel 51 über seine gelenkige Anordnung an dem ersten Sturmhebel 45 des Sturmgestänges 41 wiederum diesen im Bereich der gelenkigen Anbindung an dem zweiten Sturmhebel 45 des Sturmgestänges 41 in Richtung einer Fahrzeugbodenebene bewegt.

Der Hauptlenker 23 des Verdeckgestänges 15 wird bei dieser Bewegung des Kolbens 75 des Hydraulikzylinders 57 nicht bewegt, so dass sich der zweite Sturmhebel 45 des Sturmgestänges 41 in seiner fahrzeugfrontseitigen Anlenkung an dem Hauptlenker 23 in seiner Position nicht verändert.

Die Bewegung der gelenkigen Verbindung des ersten Sturmhebels 45 und des zweiten Sturmhebels 47 des Sturmgestänges 41 führt somit zu einer Bewegung des der gelenkigen Verbindung des ersten Sturmhebels 45 mit dem zweiten Sturmhebel 37 abgewandten Endes ersten Sturmhebels 45 in Fahrzeughochrichtung.

Der Spannbügel 37 wird hierdurch im Uhrzeigersinn um den ersten Gelenkpunkt 59 des Viergelenkmechanismus 39 bei sich nicht bewegendem ersten Hebel 67 des Viergelenkmechanismus 39 und des Verbindungshebels 73 verschwenkt, so dass der Spannbügel 37 einen Raum, welcher beispielsweise zur Öffnung eines nicht dargestellten Verdeckkastendeckel benötigt wird, freigegeben wird.

Eine derartige Verschwenkung des Spannbügels 37 um den ersten Gelenkpunkt 59 des Viergelenkmechanismus 39 wird dabei durch ein Langloch 71, welches im Bereich des dritten Gelenkpunkts 63 des Viergelenkmechanismus 39 angeordnet ist, ermöglicht.

Ein den dritten Gelenkpunkt 63 bildender Bolzen 77 bewegt sich bei der Bewegung des Spannbügels 37 bei ansonsten unbewegtem Viergelenkmechanismus 39 in dem Langloch 71 wenigstens annähernd in Richtung eines Fahrzeugbodens. Während dieser Bewegung des Bolzens 77 in dem Langloch 71 wird der zweite Hebel 69 leicht verschwenkt.

Wenn der Hydraulikantrieb 57 bei sich in der Lösestellung befindlichem Spannbügel 37 drucklos geschaltet wird, wird der Spannbügel 37 durch die Schwerkraft um den ersten Gelenkpunkt 59 des Viergelenkmechanismus 39 bei sich in dem Langloch 71 bewegten Bolzen 77 in Richtung seiner Spannstellung verschwenkt, bis der Bolzen 77 seine Position in Spannstellung des Spannbügels 37 in dem Langloch 71 erreicht hat.

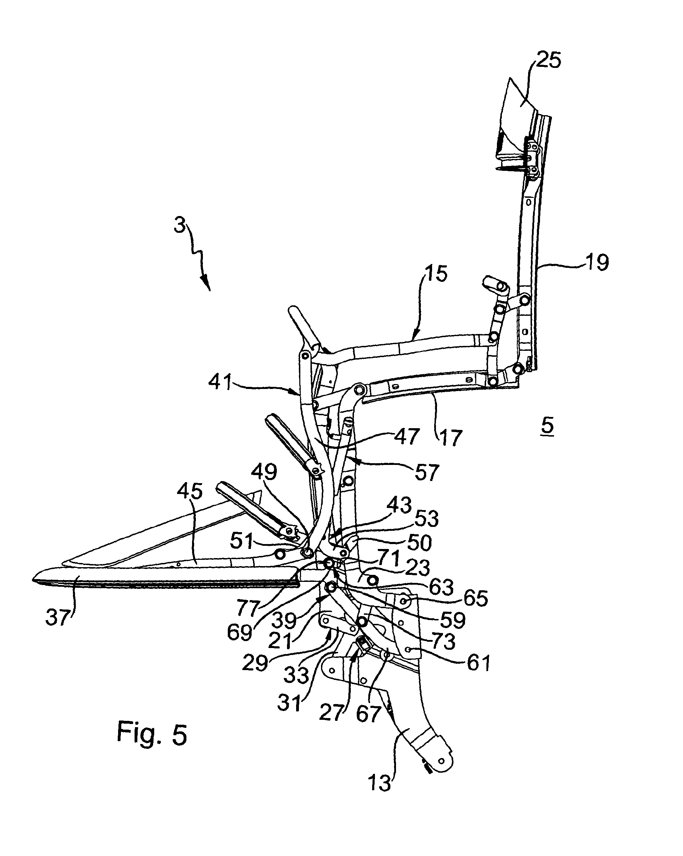

Um das Verdeck 3 von seiner geschlossenen Position in seine offene Position zu überführen, wird der Hydraulikantrieb 57 während des Bewegungsvorgangs des Spannbügels 37 drucklos geschaltet und der Kolben 35 des Haupthydraulikantriebs 27 in Richtung einer eingefahrenen Position bewegt. Hierbei wird der Hebelmechanismus 29 von dem Kolben 35 des Haupthydraulikantriebs 27 verschwenkt, wodurch wiederum die Hauptsäule 21 - wie in der Fig. 5 ersichtlich ist - entgegen dem Uhrzeigersinn verschwenkt wird.

Über seine Verbindung mit der Hauptsäule 21 wird das' Verdeckgestänge 15 inklusive des Hauptlenkers 23 hierbei verschwenkt, wobei der Viergelenkmechanismus 39 über den mit dem Hauptlenker 23 verbundenen Verbindungshebel 73 ebenfalls verschwenkt wird und der erste Hebel 67 und der zweite Hebel 69 des Viergelenkmechanismus 39 um den zweiten Gelenkpunkt 61 bzw. den vierten Gelenkpunkt 65 verschwenkt werden.

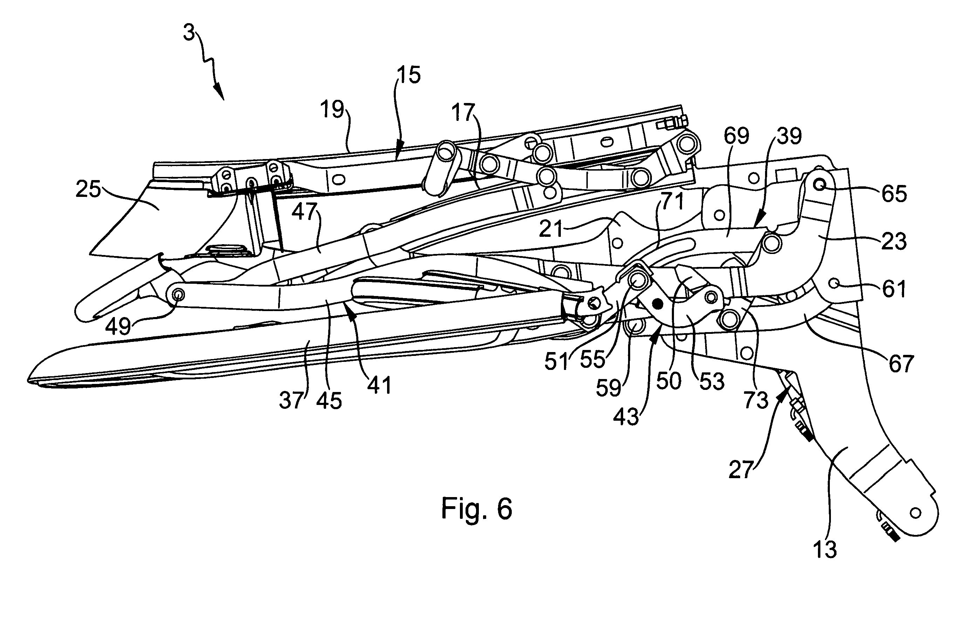

In Fig. 6 ist das Verdeck 3 in seiner offenen Position bei vollständig in den Haupthydraulikzylinder 27 eingefahrenem Kolben 35 gezeigt, wobei das Verdeck 3 hierbei als Verdeckstapel in einem nicht näher dargestellten Verdeckablageraum abgelegt ist.

## Patentansprüche

1. Verdeck eines Cabriolet-Fahrzeugs (1), welches von einem Hauptantrieb (27) zwischen einer einen Fahrgastraum (5) überspannenden geschlossenen Position und einer den Fahrgastraum (5) freigebenden offenen Position verfahrbar ist, umfassend:
- einen an einem Hauptlager (13) angelenkten Hauptlenker (23) eines Verdeckgestänges (15);
- einen Spannbügel (37), welcher in geschlossener Position des Verdecks (3) einen Verdeckbezug (7) in einer Spannstellung hält, wobei der Spannbügel (37) mittels eines mit einem Sturmgestänge (41) zusammenwirkenden Hilfsantriebs (57) zwischen der Spannstellung und einer Lösestellung bewegbar ist, und wobei das Sturmgestänge (41) mit zwei gelenkig gekoppelten Sturmhebeln (45, 47) ausgebildet ist, welche sich bei sich in seiner Spannstellung befindlichem Spannbügel (37) in einer totpunktnahen Stellung befinden, und wobei ein erster Sturmhebel (45) einerseits mit dem Spannbügel (37) und andererseits gelenkig mit dem zweiten Sturmhebel (47) verbunden ist;
- ein mit zwei gelenkig gekoppelten Spannhebeln (51, 53) ausgebildetes Spanngestänge (43), wobei ein erster Spannhebel (51) einerseits mit dem Sturmgestänge (41) und andererseits gelenkig mit einem zweiten Spannhebel (53) verbunden ist, und wobei die beiden Spannhebel (51, 53) bei sich in Spannstellung befindlichem Spannbügel (37) eine Übertotpunktstellung einnehmen,
**dadurch gekennzeichnet,**
**dass** der Spannbügel (37) über einen Mehrgelenkmechanismus (39) derart an dem Hauptlager (13) oder einer Fahrzeugkarosserie angelenkt ist, dass der Spannbügel (37) durch den Hilfsantrieb (57) unabhängig von einer Bewegung einer Dachspitze (25) bewegbar ist.

2. Verdeck nach Anspruch 1,
**dadurch gekennzeichnet,**
**dass** der Mehrgelenkmechanismus als ein Viergelenkmechanismus (39) ausgebildet ist.

3. Verdeck nach Anspruch 2,
**dadurch gekennzeichnet,**
**dass** der Viergelenkmechanismus (39) zwei Hebel (67, 69) aufweist, wobei ein erster Hebel (67) über einen ersten Gelenkpunkt (59) mit dem Spannbügel (37) und einen zweiten Gelenkpunkt (61) mit dem Hauptlager (13) und ein zweiter Hebel (69) über einen dritten Gelenkpunkt (63) mit dem Spannbügel (37) und über einen vierten Gelenkpunkt (65) mit dem Hauptlager (13) verbunden ist.

4. Verdeck nach Anspruch 3,
**dadurch gekennzeichnet,**
**dass** der zweite Hebel (69) in einem Bereich des dritten Gelenkpunkts (63) ein Langloch (71) aufweist.

5. Verdeck nach einem der Ansprüche 2 oder 4,
**dadurch gekennzeichnet,**
**dass** der erste Hebel (67) des Viergelenkmechanismus (39) über einen Verbindungshebel (73) mit dem Hauptlenker (23) verbunden ist.

6. Verdeck nach einem der Ansprüche 1 bis 5,
**dadurch gekennzeichnet,**
**dass** der zweite Spannhebel (53) an seinem der gelenkigen Verbindung mit dem ersten Spannhebel (51) abweisenden Ende mit dem Hauptlenker (23) oder einer Hauptsäule (21) oder einem Element des Verdeckgestänges (15) verbunden ist.

7. Verdeck nach einem der Ansprüche 1 bis 6,
**dadurch gekennzeichnet,**
**dass** der zweite Sturmhebel (47) an seinem der gelenkigen Verbindung mit dem ersten Sturmhebel (45) abweisenden Ende mit dem Verdeckgestänge (15) verbunden ist.

8. Verdeck nach einem der Ansprüche 1 bis 7,
**dadurch gekennzeichnet,**
**dass** der Hilfsaktuator (57) einerseits mit dem Spanngestänge (43), insbesondere mit dem zweiten Spannhebel (53), und andererseits mit dem Hauptlenker (23) oder der Hauptsäule (21) verbunden ist.

9. Verdeck nach einem der Ansprüche 1 bis 8,
**dadurch gekennzeichnet,**
**dass** ein Anschlagelement (50) vorgesehen ist, mit welchem der zweite Spannhebel (53) in geschlossener Position des Verdecks (3) zur Lagesicherung des Spannbügels (37) zusammenwirkt.

10. Verdeck nach einem der Ansprüche 1 bis 9,
**dadurch gekennzeichnet,**
**dass** eine Schließeinrichtung vorgesehen ist, mittels welcher der Spannbügel in seiner Position bei geschlossenem Verdeck entgegen einer Bewegung in Fahrzeughochrichtung sicherbar ist.
